# EUROPEAN PATENT SPECIFICATION

(11) **EP 1 055 081 B1**
(45) Date of publication and mention of the grant of the patent: **11.04.2007**
(21) Application number: 99908005.4
(22) Date of filing: 19.02.1999
(51) Int. Cl.: F16L 41/08, B21C 37/29, B29C 65/64

(54) **CONNECTION DEVICE**
VERBINDUNGSVORRICHTUNG
DISPOSITIF DE RACCORDEMENT

(30) Priority: 20.02.1998 SE 9800516
(43) Date of publication of application: 29.11.2000
(73) Proprietor: Esab AB, 402 77 Göteborg (SE)
(72) Inventor: LANDMARK, Ake, S-695 30 Laxa (SE)
(86) International application number: PCT/SE1999/000234
(87) International publication number: WO 1999/042756

(56) References cited:
- EP-A- 0 253 630
- DE-C1- 4 128 632
- SE-B- 380 606
- US-A- 1 884 602
- US-A- 2 482 944

## Description

### Technical field

The present invention relates to an arrangement for establishing a leaktight connection for a thin-walled plastic vessel for connection to said vessel of a hose or a pipe or members performing functions or carrying out measurements, where this arrangement can be mounted in its entirety from the outside of the vessel.

### Background

Vessels made of plastic are used for many purposes such as storing liquids, dispersions, powder or granulates. There is often a requirement to connect various types of arrangement to the vessel. Examples of such arrangements are hoses, pipes and pumps for conveying the contents to or from other units. Other examples are heating devices, and devices for measuring, for example, temperature, pressure or level. Mounting these arrangements, or connection devices for them, does not present any great problems as long as the vessel is open so that both the inside and the outside are accessible. In most cases, fastening is then carried out by nuts from the rear side of the arrangement.

When the vessels are tanks, often with only a small filling hole, it is difficult, however, to use tools from the inside, and the necessity of mounting exclusively from the outside is evident. The description below relates to vessels of this type, that is to say tanks of various types made essentially from a thermoplastic material. Examples of areas of application of such tanks are coolant tanks for workshop machines for cutting machining, electric arc cutting.or welding. Examples from the area of office machinery are containers for lubricants, toner or developer in copying machines. Within the automotive industry, containers for windscreen washing liquid or expansion tanks for the cooling system are examples.

In thick-walled vessels, it is possible to tap directly into the vessel wall, which affords a possibility for mounting from the outside. A disadvantage of this method is that, in addition to making a hole in the vessel, it also requires a tapping operation before mounting. Moreover, as the wall thickness decreases, it becomes increasingly difficult to maintain leaktightness permanently in such a joint, especially if the joint is subjected to varying lateral forces or great temperature changes.

Vessels of the type in question are in most cases made by blow-moulding and sometimes by rotational moulding. It is then possible to integrate into the mould inlet and outlet connections for the tank in the form of hose connection pieces. This procedure is very common. The disadvantage of the method is that it requires time-consuming burr-removal work after production of the tank if sufficiently smooth surfaces for leaktight hose connections are to be achieved. The reason for this is that it is difficult, in such a large mould as one for a tank, to obtain sufficiently close tolerances for the considerably smaller connection piece. Moreover, this method is limited to hose connection at predetermined locations on the vessel. Mounting of sensors and various members performing functions, such as pumps and heating units, can seldom be carried out using this method. Problems likewise arise in the case of tanks in which an alternative configuration is applied, especially if there are requirements for different hole diameters.

Another variant of mounting from the outside involves an elastic packing, which has a flange which rests on the outside of the vessel wall, being positioned in the hole before the arrangement concerned is pressed in. Owing to the fact that the bottom part of the arrangement is wider than the rest of the material passing through the hole, and this part lies behind the elastic packing after mounting, the packing will be pressed together when an attempt is made to pull out such an arrangement. The demounting force necessary is thus greater than the mounting force. Nevertheless, it is difficult to make such a joint permanently leaktight, especially if the joint is subjected to varying lateral forces and temperature. In addition, there is often a need for some form of friction-reducing lubrication for the mounting. This also reduces the resistance to being pulled out. A further problem is ageing of the elastic material. Sometimes, this problem is exacerbated by the contents of the tank being aggressive. US 2,482,944 discloses a fitting soldered to a metal sheet vessel.

### Object of the invention

The object of the invention is to indicate an arrangement which provides a solution to the abovementioned problems without having the disadvantages inherent in the known art.

According to the invention, this object is achieved by an arrangement which comprises on the one hand a first surface designed in such a manner that, during mounting, this surface, when pressed and/or rotated relative to the plastic vessel, pushes aside the vessel wall around a mounting hole located in the vessel, and on the other hand a second surface adapted so as, after mounting, to establish sealing contact against the inside of the vessel wall, which has sprung back, and also a securing device which is adapted so as, from the outside of the vessel, to fix the arrangement in relation to the vessel and bring about pressure between the vessel wall and said second, sealing surface.

Members performing functions may be, for example, a pump or a heating unit, and measuring members may be, for example, temperature, pressure or level sensors. Thin-walled plastic vessels are primarily vessels made of a thermoplastic material having a material thickness at the mounting location of 0.5-4.0 mm, preferably 1-3 mm.

Also indicated is a tool for mounting such arrangements according to the above, which have an essentially centrally positioned axial through-hole and are referred to as nipples below, for connecting pipes or hoses. The tool comprises a rod adapted to the dimension of the hole of the nipple and a plane surface for transmitting force to the nipple as the latter is mounted in the vessel wall.

Mounting is effected by the nipple, with the associated securing device, being positioned on the rod and, by means of a distinct pressure, being made to snap into the hole in the vessel wall. The nipple is then fixed by the nut being tightened from the outside. A washer between the vessel wall and the nut distributes the force and contributes to establishing a leaktight joint. A cup spring can be used in order to ensure permanent pressure in the joint. Instead of a nut, an axially acting locking washer can be used in the securing device. This usually allows more rapid mounting than in the case of a nut.

Additional embodiments of the tool are indicated. A second embodiment includes a separate hollow body for positioning in front of the nipple during mounting. This hollow body has an outer surface which constitutes an extension of the nipple. This is a cost-effective method if the cost of the nipple material is high, and savings can thus be made by shortening the nipple. The hollow body is shaken out of the vessel through the filling hole after nipple mounting and reused. Alternatively, if this is not possible, a less expensive material can be used for the hollow body, and this can be left in the vessel after mounting.

A third embodiment of the tool integrates the making of a hole in the vessel wall into the mounting operation. The hollow body mentioned previously is then provided with a cutting edge and mounting is then effected by combined rotation and pressing of the tool against the vessel wall. In this embodiment, it is advantageous if the end of the rod of the tool is pointed and the length of the rod is such that, during mounting, only so much of the point protrudes in front of the hollow body that a secure grip in a centring hole in the vessel wall can be maintained during cutting out of the mounting hole for the nipple.

Also indicated is a plastic vessel with an arrangement according to the description above mounted thereon.

### Brief description of the drawings

Fig. 1 shows a hose connection for mounting from the outside of a vessel, according to the prior art, with a packing made of elastic material.
Fig. 2 shows an arrangement for hose connection according to the present invention. Fig. 2a shows an embodiment in which a hollow cone belonging to the mounting tool forms an extension of the arrangement itself. Figs 2c-2d are the arrangement according to 2a or 2b seen from above and Figs 2e-2f the same seen from below.
Fig. 3 shows an embodiment of the tool with a separate hollow cone and a connection arrangement, in the form of a hose nipple, at various stages during mounting in the vessel wall.
Fig. 4 shows the tool according to the invention in an embodiment for making a hole in the vessel wall in conjunction with mounting of the connection device.
Fig. 5 shows some different embodiments of the connection arrangement according to the invention.
Fig. 6 shows on enlarged scale three different embodiments of a sealing surface for the arrangement according to the invention.
Fig. 7 indicates some further examples of application of the invention. Fig. 7a is a sensor with a flat-pin connection, 7b a heating unit, 7c a hose connection with a pipe extension and, finally, 7d an electric pump unit.

### Description of preferred embodiments

The invention is now described in the form of examples with reference to the appended drawings.

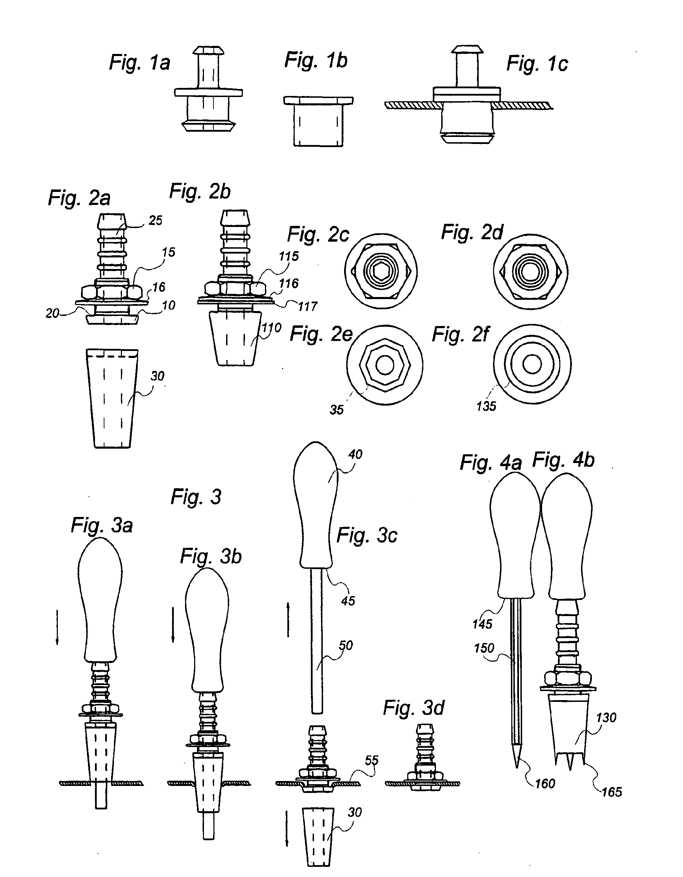

The prior art most near at hand illustrated in Fig. 1 serves as the starting point. Fig. 1a is a hose connection nipple and Fig. 1b a rubber packing. This packing is positioned in the pre-made hole in the vessel, after which the nipple is pressed in. As can be seen from Fig. 1c, the rubber packing is pressed out on the inside of the vessel wall by the wider lower edge of the nipple. If an attempt is made to pull the nipple out after mounting, the packing is pressed together even more. This makes demounting more difficult. However, sealing is effected only along the hole edge and therefore depends to a great extent on the tolerances of the hole diameter and ovality and also the condition of the packing. As no separate fixing of the nipple is effected, it can be inclined under lateral loading, increasing the risk of leakage. Both nipple and packing must be made specifically for the application concerned. This becomes costly for small and medium-sized volumes.

The invention eliminates the problems with the immediate prior art in a radical manner. Only one specially produced component is required, that is to say the nipple. The securing device consists of standard components such as a nut, a washer, a cup spring, and a locking washer. This leads to clear advantages in terms of cost. Sealing is effected against a larger surface area along the inside of the vessel wall instead of only along the hole wall. This means that the leaktightness does not depend on the abovementioned tolerances. No ageing rubber material is present. Fixing by means of a nut or locking washer means that the nipple is on the whole insusceptible to lateral forces.

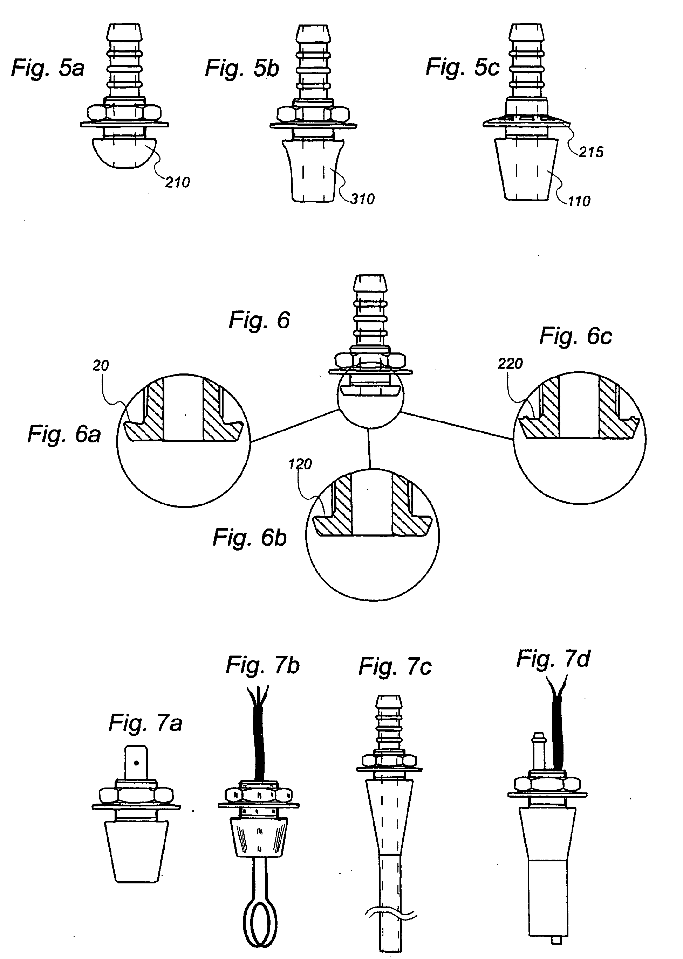

Figs 2a, 2f and 6a show the best embodiment of the hose connection if the nipple is made of expensive material such as stainless steel or brass. The front part of the nipple is then made in the form of a greatly truncated cylindrical cone, the bounding surface 10 of which serves to widen the hole in the vessel wall at the moment of mounting. The hollow body 30, the bounding surface of which constitutes a direct extension of the surface 10, is a part of the mounting tool which also consists of a rod 50; 150, a surface 45; 145, essentially at right angles to the rod, and, in the case of manual mounting, a handle 40. The hollow body makes possible sufficient widening of the hole in the vessel wall in order to snap the nipple in so that its sealing surface 20 comes to lie inside the vessel. This sealing surface is designed so that the periphery forms an edge directed towards the inside of the vessel wall. This edge penetrates the vessel wall when the securing device, consisting of a nut 15 and a cup spring 16, is tightened. In this way, a joint with permanent leaktightness is established.

If, on the other hand, the nipple is made of a less expensive material, for example a plastic material, the embodiment according to Figs 2b, 2f and 6a is preferred. No separate hollow body 30 for the tool is used in this case but the bounding surface 110 is itself then sufficiently extensive to widen the mounting hole.

According to the patent claims, the first surface 10; 110; 210; 310, which is to push aside the vessel wall at the moment of mounting, can be designed in very different ways. 35 in Fig. 2e indicates an octagonal cone instead of a circular one. The figures are only examples. The only requirement is that this surface will facilitate the pushing aside of the vessel wall at the moment of mounting. The fact that the generated line according to Patent Claim 2 can be represented mathematically by a continuous and essentially monotonic function and that this line is moved along a curve 35; 135 is, however, a reasonable requirement, and all the examples in the figures fulfil this.

With regard to the securing device, it may be advantageous to include, in addition to the nut 115 and the cup spring 116, a plane washer 117 to distribute the force against the wall 55. An axially acting locking washer 215 in place of the nut 15; 115 simplifies mounting. When the nut is tightened, it is an advantage if there is some form of wrench grip, for example at the front edge of the hose connection 25. Another method of embodiment is that the hole in the nipple has an internal hexagonal shape as in Fig. 2c, and that the tool rod in the same embodiment 150 corresponds to this.

A second sealing surface 20; 120; 220 consists of a plane surface. Some form of edge or raised portion directed towards the vessel wall improves the sealing further because it penetrates the vessel wall. The design according to 20 is to be preferred because it provides secure and permanent sealing at the same time as being easy to produce.

The mounting sequence is shown in Figure 3. Clearly, aids in the form of a lever, of the drill support type, or equipment which is automated to a greater or lesser degree can also be used. The handle 40 of the tool is then replaced with a machine adapter.

It is also possible to integrate the making of a hole into the mounting sequence. The tool is then designed according to Fig. 4. The rod is provided with an end point 160 for centring the tool. The hollow body 130 is provided with a cutting edge 165 and the rod 150. and the hole in the hollow body are designed so that the hollow body co-rotates when the tool is rotated, for example by means of an internal hexagonal shape as shown in the figure. The overall length of the rod will in this case be slightly greater than the sum of the lengths of the nipple and the hollow body.

Application of the invention goes far beyond a hose connection for thin-walled plastic vessels. Clearly, instead of the hose connection design 25, this part can be designed for connection of pipes by, for example, screw threads. As mentioned previously, other examples of applications are given in Figure 7, where the active first surface 10; 110; 210; 310 and the second, sealing surface 20; 120; 220 can be integrated into different types of members performing functions or carrying out measurements.

## Claims

1. Arrangement for establishing a leaktight connection for a thin-walled plastic vessel for connection to said vessel of a hose or a pipe or members performing functions or carrying out measurements, which arrangement can be mounted in its entirety from the outside of the vessel, **characterized in that** said arrangement comprises on the one hand a first surface (10; 110; 210; 310) designed in such a manner that, during mounting, this surface, when pressed and/or rotated relative to a first wall surface of the plastic vessel, pushes aside the vessel wall (55) around a mounting hole located in the vessel, and on the other hand a second surface (20; 120; 220) adapted so as, after mounting, the direct contact between said second surface (20; 120; 220) and a second wall surface, constituting the inside of the vessel wall, which wall has sprung back, establishes a sealing contact between said vessel and said therein mountable arrangement, and also a securing device (15, 16; 115, 116, 117; 215) which is adapted so as, from the outside of the vessel, to fix the arrangement in relation to the vessel and bring about pressure between said second wall surface and said second surface (20; 120; 220).

2. Arrangement according to Claim 1, **characterized in that** the sealing contact is a leak tight connection.

3. Arrangement according to Claim 1 or 2, **characterized in that** the first wall surface primarily is parallel to the second wall surface after mounting of the arrangement in the vessel.

4. Arrangement according to any of the preceding claims, **characterized in that** the first surface (10; 110; 210; 310) either constitutes the bounding surface of a body, generated by a line which passes through a given point being moved along a curve (35; 135), where said line can be represented mathematically by a continuous and essentially monotonic function, or constitutes the bounding surface of such a body which has been truncated.

5. Arrangement according to any of the preceding claims, **characterized in that** the first surface constitutes the bounding surface of a cone or truncated cone.

6. Arrangement according to any one of Claims 1-5, **characterized in that** the second surface (20; 120; 220) comprises an edge and/or a raised portion which penetrates the inside of the vessel wall when fixed by the securing device (15, 16; 115, 116, 117; 215).

7. Arrangement according to any one of the preceding claims, **characterized in that** the securing device (15, 16; 115, 116, 117; 215) consists of a nut or a nut (15; 115) and a washer and/or a cup spring (16; 116, 117) or, in place of a nut, an axially acting locking washer (215).

8. Arrangement according to any of the preceding claims having a tool for mounting the arrangement, **characterized in that** the tool comprises a hollow body (30; 130) having a surface designed in such a manner that, during mounting, this surface, when pressed and/or rotated relative to the plastic vessel, pushes aside the vessel wall (55.) around a mounting hole located in the vessel.

9. Arrangement according to Claim 8, where said surface of the hollow body, during operation for mounting of the arrangement of any of Claim 1 to 7, constitutes an extension of the first surface of the arrangement according to any of Claim 1 to 7.

10. Arrangement according to Claim 9, where the hollow body is provided, at the front end, with a cutting edge (165) for making a hole in the vessel in conjunction with the mounting of the arrangement.

11. Plastic vessel comprising the arrangement described in any one of Claims 1 to 7 inclusive.

## Patentansprüche

1. Anordnung zum Erstellen einer leckdichten Verbindung für einen dünnwandigen Kunststoffbehälter zur Verbindung des Behälters mit einem Schlauch oder einem Rohr oder Gliedern, welche Funktionen ausführen oder Messungen vornehmen, wobei die Anordnung in ihrer Gesamtheit von der Außenseite des Behälters befestigt werden kann, **dadurch gekennzeichnet, dass** die Anordnung einerseits eine erste Fläche (10; 110; 210; 310), die derart gestaltet ist, dass diese Fläche während des Befestigens und bei Drücken und/oder Drehen bezüglich einer ersten Wandfläche des Kunststoffbehälters die Behälterwand (55) um eine Befestigungsöffnung beiseite schiebt, welche sich in dem Behälter befindet, und andererseits eine zweite Fläche (20; 120; 220), die derart gestaltet ist, dass der direkte Kontakt zwischen der zweiten Fläche (20; 120; 220) und einer zweiten Wandfläche, welche die Innenseite der Behälterwand bildet, wobei die Wand zurückgeschnellt ist, nach der Befestigung einen abdichtenden Kontakt zwischen dem Behälter und der Anordnung herstellt, die darin befestigt werden kann, und auch eine Befestigungsvorrichtung (15, 16; 115, 116, 117; 215) umfasst, die derart gestaltet ist, dass sie die Anordnung im Hinblick auf den Behälter von der Außenseite des Behälters befestigt und zwischen der zweiten Wandfläche und der zweiten Fläche (20; 120; 220) Druck erzeugt.

2. Anordnung nach Anspruch 1, **dadurch gekennzeichnet, dass** der abdichtende Kontakt eine leckdichte Verbindung ist.

3. Anordnung nach Anspruch 1 oder 2, **dadurch gekennzeichnet, dass** die erste Wandfläche zu der zweiten Wandfläche nach der Befestigung der Anordnung in dem Behälter primär parallel ist.

4. Anordnung nach einem der vorhergehenden Ansprüche, **dadurch gekennzeichnet, dass** die erste Fläche (10; 110; 210; 310) entweder die Grenzfläche eines Körpers bildet, der durch eine Linie gegeben ist, welche durch einen gegebenen Punkt geht, der entlang einer Kurve (35; 135) bewegt wird, wobei die Linie mathematisch durch eine kontinuierliche und im Wesentlichen monotone Funktion dargestellt werden kann, oder die Grenzfläche solch eines Körpers bildet, der abgeschnitten worden ist.

5. Anordnung nach einem der vorhergehenden Ansprüche, **dadurch gekennzeichnet, dass** die erste Fläche die Grenzfläche eines Kegels oder eines Kegelstumpfes bildet.

6. Anordnung nach einem der Ansprüche 1 bis 5, **dadurch gekennzeichnet, dass** die zweite Fläche (20; 120; 220) eine Kante und/oder einen erhöhten Abschnitt umfasst, der die Innenseite der Behälterwand durchdringt, wenn diese von der Befestigungsvorrichtung (15, 16; 115, 116, 117; 215) befestigt wird.

7. Anordnung nach einem der vorhergehenden Ansprüche, **dadurch gekennzeichnet, dass** die Befestigungsvorrichtung (15, 16; 115, 116, 117; 215) aus einer Mutter oder einer Mutter (15; 115) und einer Unterlegscheibe und/oder einer Tellerfeder (16; 116, 117) oder anstatt einer Mutter aus einer axial wirkenden Sicherungsscheibe (215) besteht.

8. Anordnung nach einem der vorhergehenden Ansprüche, die ein Werkzeug zum Befestigen der Anordnung aufweist, **dadurch gekennzeichnet, dass** das Werkzeug einen hohlen Körper (30; 130) umfasst, der eine Fläche aufweist, die derart gestaltet ist, dass diese Fläche während des Befestigens und bei Drücken und/oder Drehen bezüglich des Kunststoffbehälters die Behälterwand (55) um eine Befestigungsöffnung beiseite schiebt, welche sich in dem Behälter befindet.

9. Anordnung nach Anspruch 8, wobei die Fläche des hohlen Körpers während des Vorgangs zur Befestigung der Anordnung nach einem der Ansprüche 1 bis 7 eine Erweiterung der ersten Fläche der Anordnung nach einem der Ansprüche 1 bis 7 bildet.

10. Anordnung nach Anspruch 9, wobei der hohle Körper an dem vorderen Ende mit einer Schneidekante (165) bereitgestellt ist, um in Verbindung mit der Befestigung der Anordnung eine Öffnung in dem Behälter zu erzeugen.

11. Kunststoffbehälter, umfassend die Anordnung nach einem der Ansprüche 1 bis 7 inklusive.

## Revendications

1. Agencement pour établir un raccordement étanche aux fuites pour un récipient en plastique à parois minces pour le raccordement audit récipient d'un tuyau souple ou rigide ou d'éléments remplissant des fonctions ou effectuant des mesures, lequel agencement peut être monté dans sa totalité depuis l'extérieur du récipient, **caractérisé en ce que** ledit agencement comprend d'une part une première surface (10; 110 ; 210 ; 310) conçue de telle façon à ce que, pendant le montage, cette surface, lorsqu'elle est pressée et/ou tournée par rapport à une première surface de paroi du récipient en plastique, repousse sur le côté la paroi du récipient (55) autour d'un trou de montage situé dans le récipient, et d'autre part une deuxième surface (20 ; 120 ; 220) adaptée de façon à ce que, après le montage, le contact direct entre ladite deuxième surface (20 ; 120 ; 220) et une deuxième surface de paroi, constituant l'intérieur de la paroi du récipient, laquelle paroi est revenue dans sa position initiale, établit un contact étanche entre ledit récipient et ledit agencement montable à l'intérieur de celui-ci, et aussi un dispositif de fixation (15, 16 ; 115, 116, 117 ; 215) qui est adapté de façon à fixer, depuis l'extérieur du récipient, l'agencement relativement au récipient et à appliquer une pression entre ladite deuxième surface de paroi et ladite deuxième surface (20 ; 120 ; 220).

2. Agencement selon la revendication 1, **caractérisé en ce que** le contact étanche est un raccordement étanche aux fuites.

3. Agencement selon la revendication 1 ou 2, **caractérisé en ce que** la première surface de paroi est essentiellement parallèle à la deuxième surface de paroi après le montage de l'agencement dans le récipient.

4. Agencement selon l'une quelconque des revendications précédentes, **caractérisé en ce que** la première surface (10 ; 110 ; 210 ; 310) soit constitue la surface limitative d'un corps, produite par une ligne qui passe à travers un point donné qui est bougé le long d'une courbe (35 ; 135), ladite ligne pouvant être représentée mathématiquement par une fonction continue et essentiellement monotone, soit constitue la surface limitative d'un tel corps qui a été tronqué.

5. Agencement selon l'une quelconque des revendications précédentes, **caractérisé en ce que** la première surface constitue la surface limitative d'un cône ou d'un cône tronqué.

6. Agencement selon l'une quelconque des revendications 1 à 5, **caractérisé en ce que** la deuxième surface (20 ; 120 ; 220) comprend un bord et/ou une portion surélevée qui pénètre dans l'intérieur de la paroi du récipient lorsqu'il est fixé par le dispositif de fixation (15, 16 ; 115, 116, 117 ; 215).

7. Agencement selon l'une quelconque des revendications précédentes, **caractérisé en ce que** le dispositif de fixation (15, 16 ; 115, 116, 117 ; 215) consiste en un écrou ou en un écrou (15, 115) et une rondelle et/ou en un ressort Belleville (16 ; 116, 117) ou, à la place d'un écrou, en une rondelle frein agissant axialement (215).

8. Agencement selon l'une quelconque des revendications précédentes, ayant un outil pour monter l'agencement, **caractérisé en ce que** cet outil comporte un corps creux (30 ; 130) ayant une surface conçue de façon à ce que, pendant le montage, cette surface, lorsqu'elle est pressée et/ou tournée par rapport au récipient en plastique, repousse sur le côté la paroi du récipient (55) autour d'un trou de montage situé dans le récipient.

9. Agencement selon la revendication 8, ladite surface du corps creux, pendant l'opération pour le montage de l'agencement de l'une quelconque des revendications 1 à 7, constitue un prolongement de la première surface de l'agencement selon l'une quelconque des revendications 1 à 7.

10. Agencement selon la revendication 9, le corps creux étant pourvu, à l'extrémité avant, d'un bord de coupe (165) pour faire un trou dans le récipient en conjonction avec le montage de l'agencement.

11. Récipient en plastique comprenant l'agencement décrit dans l'une quelconque des revendications 1 à 7 comprise.
